# EUROPÄISCHE PATENTSCHRIFT

(11) **EP 0 655 939 B1**
(45) Veröffentlichungstag und Bekanntmachung des Hinweises auf die Patenterteilung: **06.11.1996**
(21) Anmeldenummer: 93917552.7
(22) Anmeldetag: 13.08.1993
(51) Int. Cl.: B01D 46/02, B01D 46/42

(54) **STAUBFILTER MIT MEHREREN FILTERSCHLÄUCHEN**
DUST FILTER WITH SEVERAL FILTERING BAGS
FILTRE A POUSSIERE A PLUSIEURS SACS FILTRANTS

(30) Priorität: 20.08.1992 DE 9211157 U
(43) Veröffentlichungstag der Anmeldung: 07.06.1995
(73) Patentinhaber: Stanelle, Karl-Heinz, D-74363 Güglingen (DE)
(72) Erfinder: Stanelle, Karl-Heinz, D-74363 Güglingen (DE)
(74) Vertreter: Müller, Hans, Dipl.-Ing.
(86) Internationale Anmeldenummer: DE9300729
(87) Internationale Veröffentlichungsnummer: WO9404247

(56) Entgegenhaltungen:
- WO-A-90/11816
- DE-A- 2 439 716
- DE-A- 3 303 257

## Beschreibung

### TECHNISCHES GEBIET

Die Erfindung betrifft einen Staubfilter mit mehreren Filterschläuchen. Derartige Staubfilter sind auf einem Silo oder sonstigen vergleichbaren Behältern angebracht. Mit ihnen soll verhindert werden, daß zusammen mit der beim beispielsweise Befüllen des Behälters nach außen entweichenden Luft gleichzeitig Befüllstoffe oder sonstige Staubpartikel aus dem Behälter heraus entweichen können. Diese nach oben entweichenden Partikel sollen von den Filterschläuchen zurückgehalten werden. Von Zeit zu Zeit werden die Filterschläuche pneumatisch oder mechanisch abgereinigt.

### STAND DER TECHNIK

Bekannte Staubfilter besitzen mehrere Filterschläuche, die durch einen die Filterschläuche umhüllenden Mantel von außen geschützt sind. Damit die Filterschläuche zugänglich bleiben, kann in dem Mantel eine türartige Öffnung angebracht sein. Der Mantel wird von oben durch eine aufsitzende Haube abgedeckt. Zwischen dem Mantelrand und der Haube ist ein Spalt, durch den die den Staubfilter verlassende, gereinigte Luft nach außen hin entweichen kann. Das Anbringen der im Mantel vorhandenen Tür erleichtert die Zugänglichkeit in das Innere des Filters hinein und damit das Auswechseln von defekten Filterschläuchen, stellt aber durch die notwendigerweise vorhandenen Öffnungsschlitze ein gewisses Dichtungsproblem dar. Daher wird oftmals auf das Anbringen einer Tür verzichtet, was bedeutet, daß zum Auswechseln der Filterschläuche die Haube von dem Mantel entfernt werden muß. Die Haube ist aufgrund ihres Gewichtes zu schwer, um von einer Person vom Mantel wegbewegt werden zu können, so daß entweder Kranhilfsmittel eingesetzt werden müssen, was in aller Regel aufgrund der örtlichen Gegebenheiten nicht möglich ist, oder es müssen, was regelmäßig der Fall ist, mehrere Personen zum Handhaben der Haube und damit zum Auswechseln der Filterschläuche tätig werden.

### DARSTELLUNG DER ERFINDUNG

Ausgehend von diesem Stand der Technik liegt der Erfindung die Aufgabe zugrunde, einen bedienungsfreundlichen und damit wirtschaftlich verbesserten Staubfilter der eingangs genannten Art bereitzustellen. der mit einer Tür in seinem Mantel ausgestattet ist.
Diese Erfindung ist durch die Merkmale des Patentanspruchs 1 gegeben. Ausgehend von dem im Stand der Technik bekannten, mit einer Tür ausgestatteten und mehrere Filterschläuche aufweisenden Staubfilter zeichnet sich der erfindungsgemäße Staubfilter dadurch aus, daß das als Tür ausgebildete Mantelteil in seiner ZU-Stellung von oben im seitlichen Abstand von der Haube umfaßt wird, wobei die Haube aus ihrer unteren Stellung, in der sie den oberen Mantelrand dieses Mantelteils im seitlichen Abstand von oben umfaßt, lediglich mit Teilbereichen in eine obere Stellung versetzbar ist. In ihrer oberen Stellung ist die Haube derart oberhalb dieses Mantelrandes positioniert, daß dieses als Tür ausgebildete Mantelteil als Tür verwendbar und damit in seine AUF-Stellung bzw. ZU-Stellung verschwenkt werden kann. Die Tür ist damit mit ihrem oberen Rand in ihrer verschlossenen Stellung, in der sie sich gewöhnlich befindet, von dem seitlichen dachartigen Überstand der Haube abgedeckt, da sie zurückgesetzt unterhalb der Haube vorhanden ist. Dadurch brauchen besondere Dichtungsprobleme in diesem oberen Bereich der Tür praktisch nicht ausgebildet zu werden. Neben diesem Vorteil erweist es sich noch als besonders bedeutsam, daß die Haube nur von einer Person zwecks Öffnen der Tür wegbewegt werden muß, da nicht die Haube insgesamt sondern lediglich Teilbereiche derselben bewegt werden müssen. Die Haube kann dabei beispielsweise von dem Mantelrand mit der Türöffnung weggeschwenkt und damit insgesamt verschwenkt werden. Dieses Verschwenken ermöglicht es, das Hauptgewicht der Haube von dem Staubfilter nach wie vor aufnehmen zu lassen, was bedeutet, daß nicht das volle sondern nur das teilweise Gewicht der Haube bewegt werden muß. Dieses Teilgewicht der Haube kann so klein gewählt werden, was durch entsprechende minimale Positionsverschiebungen der Haube konstruktiv ermöglicht werden kann, daß auch nur eine einzige Person die Haube entsprechend versetzen kann.

Nach einer Weiterbildung der Erfindung kann die Tür nunmehr optimal groß, d. h. über die gesamte Höhe des Mantels ausgebildet werden. Der Mantel kann damit erstmals vollständig als Tür ausgebildet werden.

Die Zugänglichkeit in das Innere des Staubfilters kann dadurch weiter vergrößert werden, daß der Mantel aus mehreren, insbesondere nur aus derartigen Mantelteilen ausgebildet wird. In diesem Falle ist dann von jeder Umfangsseite her die Zugänglichkeit in den Staubfilter hinein gegeben.

Nach einer wesentlichen Weiterbildung der Erfindung besteht der Mantel des Staubfilters aus mehreren, sich jeweils im Scharnierbereich schuppenartig überlappenden und als Tür ausgebildeten Mantelteilen. Ferner kann das als Tür ausgebildete Mantelteil in seinem Scharnierbereich in einem Bodenring und in einem Deckenring jeweils schwenkbar gelagert sein und ferner dieses Mantelteil mit seinem dem Scharnierbereich gegenüberliegenden Bereich an einem zu ihm benachbarten Mantelteil lösbar befestigt sein. Mit einer derartigen Ausbildung ist der Mantel entsprechend der Anzahl der einzelnen Mantelteile, die alle als Tür funktionell ausgebildet sein können, vollständig zerlegbar. Dies fördert seine Montagefreundlichkeit, da er im zerlegten Zustand beispielsweise äußerst platzsparend vom Fertigungsbetrieb zu seinem Aufstellort transportiert werden kann. Dadurch, daß jede Tür in ihrem Scharnierbereich von ihrer benachbarten Tür überlappt wird, treten keine Dichtungsprobleme in den seitlichen, senkrechten Randbereichen jeder Tür auf.

Nach einer konkreten Ausführungsform für einen derartig zerlegbaren Staubfilter sind auf dem Bodenring und auf dem Deckenring jeweils aufeinanderzu gerichtete Rohrstücke befestigt. Auf diese beiden Rohrstücke kann das Mantelteil mit einer Randumbiegung von oben bzw. von unten her eingesetzt werden, so daß dadurch eine scharnierartige Schwenkbewegung für das Mantelteil in seiner Funktion als Tür auf einfache Weise ermöglicht wird. Die Randumbiegung kann entweder unmittelbar auf dem Rohrstück des Boden- bzw. Deckenringes eingeschoben sein, es ist allerdings auch möglich, eine Hülse dazwischen anzuordnen, so daß die Randumbiegung diese Hülse umgreift und dann diese Hülse zusammen mit der Randumbiegung des Mantelteils die Rohrstücke des Boden- und Deckenteils umhüllt.

Wie eingangs ausgeführt, läßt sich die Haube problemlos von einer einzigen Person so aus ihrer Ruhestellung nach oben hin bewegen, daß das Mantelteil und damit die in dem Mantel vorhandene Tür aufbewegt d. h. vom Filter weggeschwenkt werden kann. Nach einer vorteilhaften Ausführungsform für eine derartige Verstellmöglichkeit der Erfindung ist an dem unteren umlaufenden Randbereich der Haube zumindest ein Halteteil befestigt, das in der AUF-Stellung der Haube an einem ortsfest vorhanden Gegenteil so angelegt werden kann, daß dieses Halteteil und damit die Haube von diesem Gegenteil in ihrer AUF-Stellung gehalten werden kann. Dieser Bereich der Haube, der in diesem Bereich des Filters das Halteteil und das Gegenteil aufweist, kann dann vom Mantelrand nach oben wegbewegt werden kann. Durch entsprechend vieles Anordnen derartiger Halteteile und Gegenteile entlang dem Mantelrand, können dann nacheinander mehrere Bereiche der Haube und so im Endeffekt die gesamte Haube vom Mantelrand nach oben wegbewegt werden.

Konkrete Ausführungsformen für dieses Halteteil und Gegenteil sind Gegenstand der Unteransprüche und sind in dem nachstehenden Ausführungsbeispiel näher beschrieben.

### KURZE BESCHREIBUNG DER ZEICHNUNG

Die Erfindung wird im folgenden anhand des in der Zeichnung dargestellten Ausführungsbeispiels näher beschrieben und erläutert. Es zeigen:
- Fig. 1: eine perspektivische Außenansicht des erfindungsgemäßen Staubfilters,
- Fig. 2: den Staubfilter nach Fig. 1 mit teilweise hochbewegter Haube und teilweise geöffnetem Mantelteil,
- Fig. 3: eine schematische Draufsicht von innen auf den Bodenbereich des Staubfilters gemäß Fig. 1 und 2,
- Fig. 4: eine perspektivisch auseinandergezogene, schematische Darstellung der Verbindungsmittel zwischen Mantel und Haube,
- Fig. 5: einen Querschnitt durch den in Fig. 4 dargestellten Bereich, im hochgehobenen Zustand dieses Haubenbereiches und
- Fig. 6: eine Darstellung gemäß Fig. 5 im nach unten bewegten, Ruhezustand der Haube.

### WEGE ZUR AUSFÜHRUNG DER ERFINDUNG

Ein Staubfilter 10 besitzt einen im Grundriß etwa kreiszylindrischen Mantel 12, der aus im vorliegenden Beispielsfall drei Mantelteilen 14, 15, 16 zusammengesetzt ist.

Oben wird der Staubfilter 10 von einer im Grundriß kreisförmigen Haube 18 bedeckt. Die Haube 18 ist im Grundriß größer als es dem Durchmesser des Mantels 12 entspricht. Dadurch ist zwischen Mantel 12 und Haube 18 ein Spalt 20 vorhanden. Durch diesen Spalt 20 hindurch kann die im Inneren des Staubfilters 10 vorhandene Reinluft nach außen entweichen.

Innerhalb des Staubfilters 10 sind mehrere Filtertaschen 22 vorhanden, durch die die zu reinigende Luft hindurchgeführt wird. Zum Reinigen der Filtertaschen 22 ist im Bereich unterhalb der Haube 18 eine mechanische oder pneumatische Vorrichtung vorhanden, mit der die Filtertaschen 22 abgereinigt werden können.

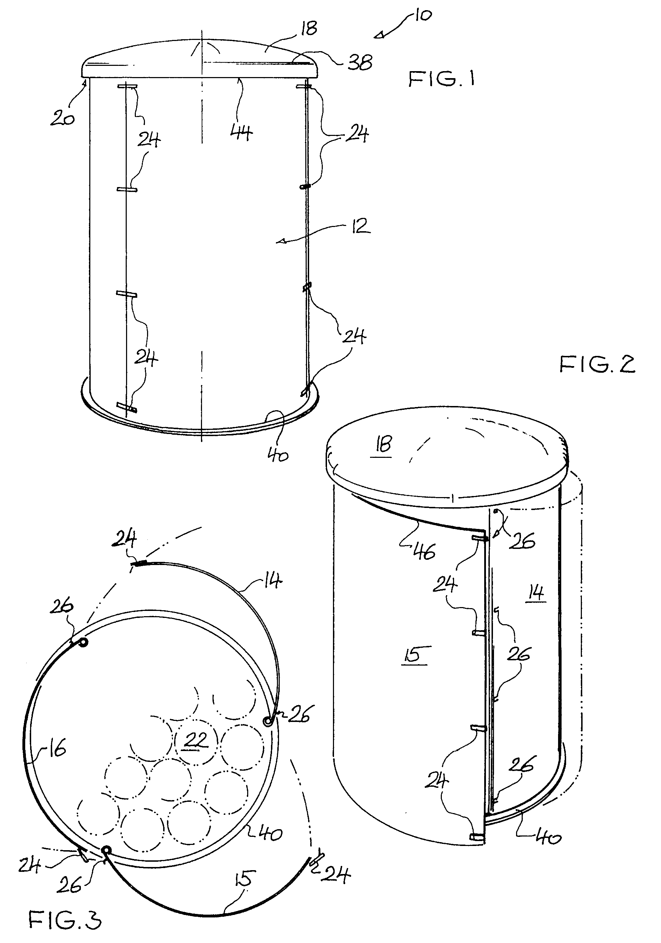

Die Mantelteile 14, 15, 16 besitzen an ihrem einen Längsrand mehrere, im vorliegenden Beispielsfall vier Klammern 24. An ihrem gegenüberliegenden Längsrandbereich sind, im vorliegenden Beispielsfall vier Haken 26 so angeordnet, daß sich im verschlossenen Zustand der Mantelteile 14, 15, 16 die Klammern 24 vom beispielsweise Mantelteil 14 in die Haken 26 vom benachbarten Mantelteil 16 verschließbar einklammern können. In entsprechender Weise sind die Klammern 24 vom Mantelteil 16 an den Haken 26 vom Mantelteil 15 zu befestigen. Schließlich kann auch das Mantelteil 15 mit seinen Klammern 24 an den Haken 26 des Mantelteils 14 befestigt werden. Die Befestigung der Klammern 24 an den entsprechenden Haken 26 ist lösbar, so daß durch Lösen dieser Klammer-Haken-Verbindung 24, 26 die entsprechenden Mantelteile aus dem Grundrißbereich des Staubfilters 10 wegbewegt werden können, so wie dies in Fig. 2 und insbesondere Fig. 3 ersichtlich ist.

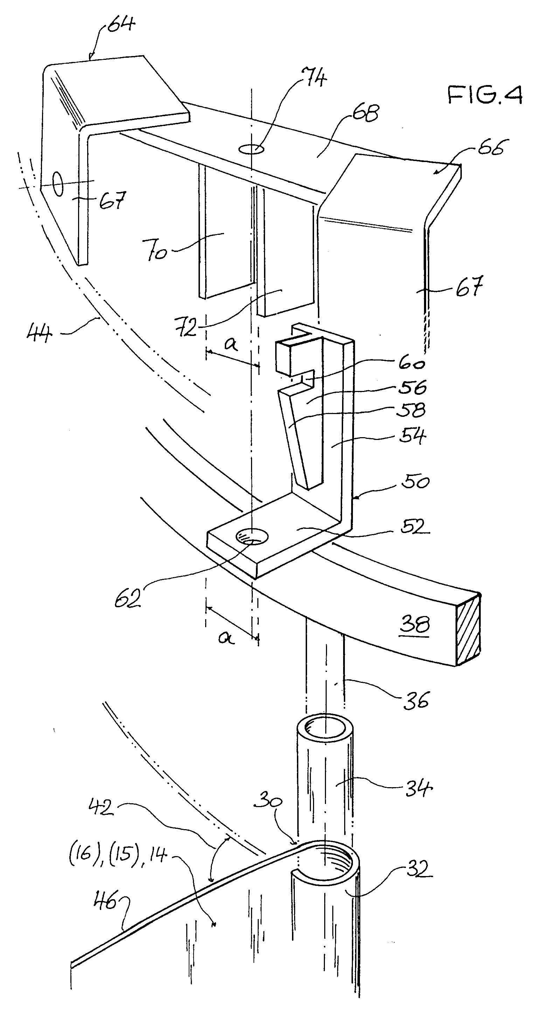

Die Schwenkbewegung der Mantelteile 14, 15, 16 wird durch eine Scharnierausbildung bewerkstelligt, die im unteren Teil der Fig. 4 schematisch dargestellt ist. So besitzt jedes Mantelteil 14, 15, 16 eine identische Ausbildung dahingehend, daß der die Haken 26 aufweisende Randbereich 30 eine über die gesamte Höhe des Mantelteils sich erstreckende Umbiegung 32 besitzt. Diese Umbiegung 32 umschließt eine über die Höhe des Mantelteils ebenfalls reichende Hülse 34. Diese Hülse 34, die wie die Umbiegung 32 im Querschnitt kreisförmig ist, sitzt von unten her in einem Rohrstummel 36, der an einem umlaufenden oberen Deckenring 38 nach unten hin auskragend befestigt ist. In gleicher Weise ist an einem unteren Bodenring 40 (Fig. 1, 2 und 3) ein Rohrstummel 36 befestigt, der nach oben hin in Richtung auf den Rohrstummel 36 des Deckenringes 38 hin auskragt. Diese am Deckenring 38 und am Bodenring 40 jeweils befestigten Rohrstummel fluchten miteinander. Die Rohrstummel 36 sind im vorliegenden Beispielsfall im Grundriß quadratisch und ragen in die Hülse 34 jeweils von oben bzw. von unten hinein. Die Hülse 34 läßt sich um die Rohrstummel 36 herumschwenken, so daß dadurch die Schwenkbewegung 42 des jeweilgen Mantelteils 14, 15, 16 ermöglicht wird.

Im geschlossenen Zustand, d. h. im abgesenkten Zustand der Haube 18, läßt sich kein Mantelteil 14, 15, 16 verschwenken, da der untere Randbereich 44 der Haube 18 zwar seitlich versetzt zum oberen Rand 46 jedes Mantelteils 14, 15, 16, aber dennoch unterhalb dieses Randes 46 vorhanden ist. Zum Verschwenken 42 der Mantelteile 14, 15, 16 muß daher der untere Randbereich 44 der Haube 18 nach oben hin wegbewegt werden. Dieses Wegbewegen der Haube 18 erfolgt mit Vorrichtungsteilen, die in Fig. 4, 5 und 6 schematisch dargestellt sind.

Auf dem Deckenring 38 ist ein Winkel 50 mit seinem unteren Schenkel 52 befestigt. Dieser untere Schenkel 52 ragt radial vom Deckenring 38 nach außen weg. An dem oberen, senkrechten Schenkel 54 dieses Winkels 50 ist ein Wandteil 56 befestigt, das radial von der Innenseite dieses Schenkels 54 nach außen auskragt. Es besitzt eine von unten nach oben sich verbreiternde Größe, so daß eine Anlaufschräge 58 ausgebildet ist. Im oberen Bereich dieses Wandteils 56 ist ein in etwa parallel zum unteren Schenkel 52 verlaufender Schlitz 60 vorhanden. Schließlich ist im unteren Schenkel 52, außerhalb des Bereichs des Deckenringes 38 eine Durchbohrung 62 im Winkel 50 vorhanden.

Im unteren Randbereich 44 der Haube 18 sind im Abstand zwei gleich ausgebildete Winkel 64, 66 vorhanden. Diese sind mit ihrem senkrechten Schenkel 67 an der Innenseite der Haube 18 festgeschraubt. Sie können auch durch andere Hilfsmittel wie z. B. eine Schweißnaht an der Haube befestigt werden. Die Winkel 64, 66 sind über eine Platte 68 miteinander verbunden. Von dieser Platte 68 kragen zwei seitliche Führungsplatten 70, 72 nach unten aus, die einen lichten Abstand a zwischen sich aufweisen. Dieser Abstand a entspricht auch der Breite des unteren Schenkels 52 derart, daß die beiden seitlichen Führungsplatten 70, 72 seitlich an dem unteren Schenkel 52 vorbeigeführt werden können.

Diese Hubvorrichtung für die Haube 18 funktioniert auf folgende Weise.

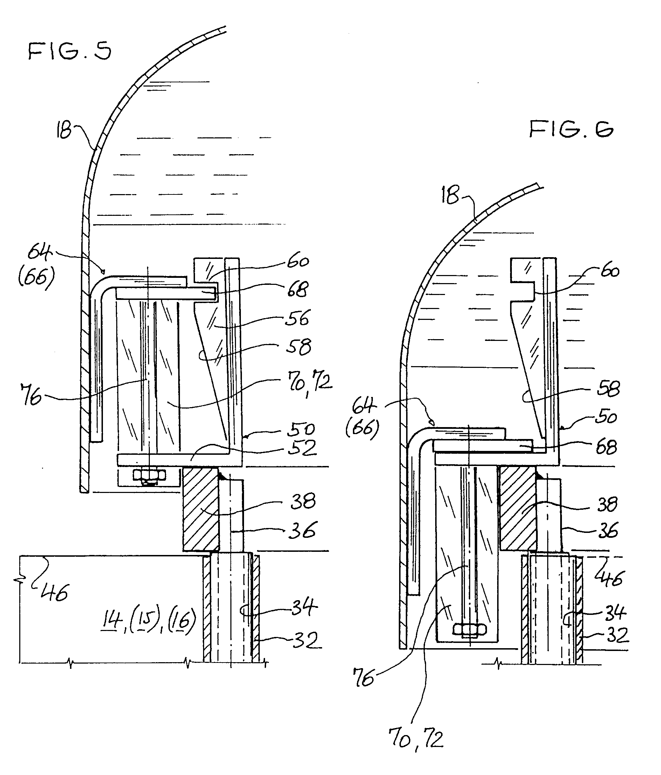

In Fig. 6 ist der untere, Ruhezustand der Haube 18 dargestellt. Die beiden seitlichen Führungsplatten 70, 72 sind seitlich an dem unteren Schenkel 52 vorbeigeführt, so daß die Platte 68 voll auf dem unteren Schenkel aufsitzen kann. Dadurch ruht das Gewicht der Haube 18 im Bereich dieser Platte 68 und damit im Bereich der Winkel 64, 66 auf diesem unteren Schenkel 52 und damit letztendlich auf dem Deckenring 38 in diesem Bereich auf. Durch Hochschieben der Haube 18 im Bereich der Platte 68 und damit im Bereich des Winkels 50 gleiten die seitlichen Führungsplatten 70, 72 so weit an dem unteren Schenkel 52 vorbei nach oben, bis die an der Haube über die Winkel 64, 66 befestigte Platte 68 in den Schlitz 60 eingreifen kann. Beim Hochschieben der Haube 18 wird letztere durch das Vorhandensein der Anlaufschräge 58 etwas nach außen elastisch verformt, so daß die Platte 68 beim höhenmäßigen Auftreffen auf den Schlitz 60 sofort in den Schlitz 60 hineinschlüpft. Innerhalb des Schlitzes 60 ist dadurch die Haube 18 höhenmäßig oberhalb des oberen Randes 46 von dem betreffenden unterhalb dieses Winkels 50 vorhandenen Mantelteils 14 oder 15 oder 16 positioniert. Dieser obere Zustand der Haube in diesem ihrem Haubenbereich ist in Fig. 5 dargestellt. Durch Herausziehen der Platte 68 aus dem Schlitz 60, was durch die gewisse elastische Verformbarkeit der Haube möglich ist, kann die Haube 18 in diesem ihrem Bereich wieder nach unten auf den Deckenring 38 aufgelagert werden, so wie dies in Fig. 6 dargestellt ist.

Durch entsprechend längs des Deckenringes 38 verteilt angeordnete Winkel 50 und entsprechend vielen, den Winkeln 50 zugeordneten Platten 68 kann die Haube 18 nacheinander von nur einer Person in eine vollständig von dem oberen Rand 46 des Mantels 12 wegbewegte Stellung gebracht werden.

In der Platte 68, im Bereich zwischen den seitlichen Führungsplatten 70, 72 ist eine Durchbohrung 74 so angebracht, daß ein Bolzen 76 durch diese Durchbohrung 74 und durch die im unteren Schenkel 52 vorhandene Durchbohrung 62 hindurchgeführt werden kann. Auf diese Weise kann sichergestellt werden, daß die Haube nach oben hin nicht zu weit weggehoben werden kann. Die seitlichen Führungsplatten 70, 72 verhindern schließlich noch, daß die Haube umfangsmäßig seitlich beim Rauf- und Runterbewegen verschoben werden kann. Dadurch wird sichergestellt, daß die Haube immer in den Schlitz 60 beim Öffnen eingreift.

Der vorstehend beschriebene Staubfilter hat noch den weiteren Vorteil, daß er weitestgehend zerlegt transportiert werden kann. Dadurch lassen sich nicht nur seine Transportkosten beispielsweise zwischen Herstellbetrieb und Aufstellort verringern, sondern darüber hinaus auch seine Montage wesentlich vereinfachen.

## Patentansprüche

1. Staubfilter (10) mit mehreren Filterschläuchen (22), mit
- einem die Filterschläuche (22) umhüllenden Mantel (12),
- zumindest einer Tür in dem Mantel (12),
- einer auf dem Mantel (12) von oben aufsitzenden Haube (18), die den oberen Mantelrand (46) im seitlichen Abstand von oben umfaßt,
**dadurch gekenzeichnet,** daß
- das als Tür ausgebildete Mantelteil (14, 15, 16) in seiner ZU-Stellung von oben im seitlichen Abstand von der Haube (18) umfaßt wird,
- die Haube (18) aus ihrer unteren Stellung, in der sie den oberen Mantelrand (46) dieses Mantelteils (14, 15, 16) im seitlichen Abstand von oben umfaßt, lediglich mit Teilbereichen in eine obere Stellung versetzbar ist, in der sie derart oberhalb dieses Mantelrandes (46) positioniert ist, daß dieses als Tür ausgebildete Mantelteil (14, 15, 16) in seine AUF-Stellung bewegbar ist.

2. Staubfilter nach Anspruch 1,
**dadurch gekenzeichnet,** daß
- das als Tür ausgebildete Mantelteil (14, 15, 16) über die gesamte Höhe des Mantels (12) sich erstreckt.

3. Staubfilter nach Anspruch 1 oder 2,
**dadurch gekenzeichnet,** daß
- der Mantel (12) aus mehreren, insbesondere nur aus derartigen Mantelteilen (14, 15, 16) zusammengesetzt ist.

4. Staubfilter nach einem der vorstehenden Ansprüche,
**dadurch gekenzeichnet,** daß
- der Mantel (12) aus mehreren, sich jeweils im Scharnierbereich schuppenartig überlappenden und als Tür ausgebildeten Mantelteilen (14, 15, 16) besteht.

5. Staubfilter nach einem der vorstehenden Ansprüche,
**dadurch gekennzeichnet,** daß
- das als Tür ausgebildete Mantelteil (14, 15, 16) in seinem Scharnierbereich in einem Bodenring (40) und in einem Deckenring (38) jeweils schwenkbar gelagert ist,
- dieses Mantelteil (14, 15, 16) mit seinem dem Scharnierbereich gegenüberliegenden Bereich an einem zu ihm benachbarten Mantelteil lösbar befestigt ist.

6. Staubfilter nach einem der vorstehenden Ansprüche,
**dadurch gekenzeichnet,** daß
- auf dem Boden- und Deckenring (40, 38) jeweils aufeinander zu gerichtete Rohrstücke (36) befestigt sind,
- das Mantelteil (14, 15, 16) eine Randumbiegung (32) besitzt, in die von ihren Enden her diese beiden Rohrstücke (36) jeweils einschiebbar sind.

7. Staubfilter nach Anspruch 6,
**dadurch gekenzeichnet,** daß
- die Randumbiegung (32) eine Hülse (34) umgreift, in die die beiden Rohrstücke (36) einschiebbar sind.

8. Staubfilter nach einem der vorstehenden Ansprüche,
**dadurch gekenzeichnet,** daß
- zumindest ein Halteteil (64, 66, 68) an dem unteren, umlaufenden Randbereich (44) der Haube (18) befestigt ist,
- dieses Halteteil in der AUF-Stellung der Haube an einem ortsfest vorhandenen Gegenteil (50) so anlegbar ist, daß dieses Halteteil und damit die Haube von diesem Gegenteil in ihrer AUF-Stellung gehalten ist.

9. Staubfilter nach Anspruch 8,
**dadurch gekenzeichnet,** daß
- das Gegenteil (50) an dem Deckenring (38) nach oben wegstehend befestigt ist,
- das Gegenteil (50) eine Schulterausbildung (56, 60) besitzt, auf der das Halteteil (68) auflagerbar ist.

10. Staubfilter nach Anspruch 9,
**dadurch gekenzeichnet,** daß
- die Schulterausbildung durch einen in etwa horizontalen Schlitz (60) im Gegenteil gebildet ist.

11. Staubfilter nach einem der vorstehenden Ansprüche,
**dadurch gekenzeichnet,** daß
- das Halteteil (68) eine Führung (70, 72) aufweist derart, daß nur eine Verstellung der Haube (18) nach oben und unten, dagegen keine seitliche Verstellung in Umfangsrichtung der Haube (18) möglich ist.

## Claims

1. Dust filter (10) having a plurality of filter tubes (22), with
- a casing (12) enveloping the filter tubes (22),
- at least one door in the casing (12),
- a cover (18) which is seated on the casing (12) from above and which surrounds the upper casing edge (46) from above with a lateral clearance,
characterized in that
- the casing part (14, 15, 16) designed as a door, in its SHUT position, is surrounded by the cover (18) from above with a lateral clearance,
- the cover (18) can be displaced only with part regions out of its lower position, in which it surrounds the upper casing edge (46) of this casing part (14, 15, 16) from above with a lateral clearance, into an upper position, in which it is positioned above this casing edge (46) in such a way that this casing part (14, 15, 16) designed as a door can be moved into its OPEN position.

2. Dust filter according to Claim 1,
characterized in that
- the casing part (14, 15, 16) designed as a door extends over the entire height of the casing (12).

3. Dust filter according to Claim 1 or 2,
characterized in that
- the casing (12) is composed of a plurality of casing parts (14, 15, 16) of this type, in particular solely of casing parts (14, 15, 16) of this type.

4. Dust filter according to one of the preceding claims,
characterized in that
- the casing (12) consists of a plurality of casing parts (14, 15, 16) overlapping one another in each case in the hinge region in an imbricated manner and designed as a door.

5. Dust filter according to one of the preceding claims,
characterized in that
- the casing part (14, 15, 16) designed as a door, in its hinge region, is pivotably mounted in each case in a bottom ring (40) and in a top ring (38),
- this casing part (14, 15, 16) is releasably fastened, with its region located opposite the hinge region, to a casing part adjacent to it.

6. Dust filter according to one of the preceding claims,
characterized in that
- tubular pieces (36) directed towards one another are fastened in each case to the bottom ring (40) and top ring (38),
- the casing part (14, 15, 16) possesses a bent-round edge portion (32), into which these two tubular pieces (36) can be pushed in each case from its ends.

7. Dust filter according to Claim 6,
characterized in that
- the bent-round edge portion (32) surrounds a sleeve (34), into which the two tubular pieces (36) can be pushed.

8. Dust filter according to one of the preceding claims,
characterized in that
- at least one holding part (64, 66, 68) is fastened to the lower peripheral edge region (44) of the cover (18),
- in the OPEN position of the cover, this holding part can be laid against a fixed counterpart (50) in such a way that this holding part and therefore the cover are held in their OPEN position by this counterpart.

9. Dust filter according to Claim 8,
characterized in that
the counterpart (50) is fastened to the top ring (38) so as to project upwards,
- the counterpart (50) possesses a shoulder design (56, 60), on which the holding part (68) can be supported.

10. Dust filter according to Claim 9,
characterized in that
- the shoulder design is formed by an approximately horizontal slot (60) in the counterpart.

11. Dust filter according to one of the preceding claims,
characterized in that
- the holding part (68) has a guide (70, 72), such that only an upward and downward adjustment of the cover (18), but no lateral adjustment in the circumferential direction of the cover (18), is possible.

## Revendications

1. Filtre à poussière (10) avec plusieurs sacs filtrants tubulaires (22), comprenant
- une enveloppe (12) entourant les sacs filtrants tubulaires (22),
- au moins une porte dans l'enveloppe (12),
- un capot (18), reposant par le haut sur l'enveloppe (12) et qui embrasse par le haut à distance latérale le bord supérieur (46) de l'enveloppe,
**caractérisé** en ce que
- la partie d'enveloppe (14, 15, 16) conçue comme porte est, dans sa position fermée, tenue embrassée par le haut à distance latérale par le capot (18),
- le capot (18) peut, à partir de sa position inférieure dans laquelle il embrasse par le haut à distance latérale le bord supérieur (46) de cette partie d'enveloppe (14, 15, 16), être déplacé seulement par des régions partielles dans une position supérieure, dans laquelle il est positionné au-dessus de ce bord d'enveloppe (46) de telle sorte que cette partie d'enveloppe (14, 15, 16) conçue comme porte peut être déplacée dans sa position ouverte.

2. Filtre à poussière selon la revendication 1, **caractérisé** en ce que la partie d'enveloppe (14, 15, 16) conçue comme porte s'étend sur toute la hauteur de l'enveloppe (12).

3. Filtre à poussière selon la revendication 1 ou 2, **caractérisé** en ce que l'enveloppe (12) est constituée de plusieurs parties d'enveloppe, notamment uniquement de telles parties d'enveloppe (14, 15, 16).

4. Filtre à poussière selon une des revendications précédentes, **caractérisé** en ce que l'enveloppe (12) est constituée de plusieurs parties d'enveloppe (14, 15, 16) conçues comme porte et se chevauchant respectivement à la manière de tuiles dans leur région de charnière.

5. Filtre à poussière selon une des revendications précédentes, **caractérisé** en ce que
- la partie d'enveloppe (14, 15, 16) conçue comme porte est, dans sa région de charnière, montée à pivotement respectivement dans une bague de fond (40) et dans une bague de recouvrement (38),
- cette partie d'enveloppe (14, 15, 16) est, par sa région opposée à la région de charnière, fixée de façon amovible à une partie d'enveloppe qui en est voisine.

6. Filtre à poussière selon une des revendications précédentes, **caractérisé** en ce que
- des éléments tubulaires (36) dirigés l'un vers l'autre sont fixés respectivement sur la bague de fond (40) et sur la bague de recouvrement (38),
- la partie d'enveloppe (14, 15, 16) possède un bord recourbé (32) dans lequel ces deux éléments tubulaires (36) peuvent être respectivement enfilés par leurs extrémités.

7. Filtre à poussière selon la revendication 6, **caractérisé** en ce que le bord recourbé (32) enserre un manchon (34) dans lequel les deux éléments tubulaires (36) peuvent être enfilés.

8. Filtre à poussière selon une des revendications précédentes, **caractérisé** en ce que
- au moins une pièce de maintien (64, 66, 68) est fixée sur la région de bord inférieur entourant (44) du capot (18),
- cette pièce de maintien peut, dans la position ouverte du capot, être appliquée contre une pièce complémentaire (50), stationnairement présente, de telle sorte que cette pièce de maintien et donc le capot est maintenu dans sa position ouverte par cette pièce complémentaire.

9. Filtre à poussière selon la revendication 8, **caractérisé** en ce que
- la pièce complémentaire (50) est fixée sur la bague de recouvrement (38) en faisant salle vers le haut,
- la pièce complémentaire (50) possède une configuration en épaulement (56, 60) sur laquelle peut s'appuyer la pièce de maintien (68).

10. Filtre à poussière selon la revendication 9, **caractérisé** en ce que la configuration en épaulement est formée dans la pièce complémentaire par une fente (60) approximativement horizontale.

11. Filtre à poussière selon une des revendications précédentes, **caractérisé** en ce que la pièce de maintien (68) présente un guidage (70, 72) de telle sorte qu'est seul possible un déplacement du capot (18) vers le haut et vers le bas, mais non un déplacement latéral dans la direction circonférentielle du capot (18).
